**Europäisches Patentamt**

**European Patent Office**

**Office européen des brevets**

(19)

(11) Veröffentlichungsnummer: **0 153 643**
**B1**

(12) **EUROPÄISCHE PATENTSCHRIFT**

(45) Veröffentlichungstag der Patentschrift:
**14.09.88**

(51) Int. Cl.⁴: **F 16 B 13/06**

(21) Anmeldenummer: **85101421.7**

(22) Anmeldetag: **11.02.85**

(54) **Sprelzdübel.**

(30) Priorität: **14.02.84 DE 3405108**

(43) Veröffentlichungstag der Anmeldung:
**04.09.85 Patentblatt 85/36**

(45) Bekanntmachung des Hinweises auf die Patenterteilung:
**14.09.88 Patentblatt 88/37**

(84) Benannte Vertragsstaaten:
**AT BE CH FR GB IT LI LU NL SE**

(56) Entgegenhaltungen:
**AT - B - 144 921**
**DE - A - 2 940 514**
**DE - B - 1 291 458**
**DE - U - 7 323 483**
**DE - U - 7 604 795**
**FR - E - 14 895**
**US - A - 3 383 975**

(73) Patentinhaber: **Heuel, Wilhelm, Hagener Strasse 22,**
**D-5962 Drolshagen (DE)**

(72) Erfinder: **Heuel, Wilhelm, Hagener Strasse 22,**
**D-5962 Drolshagen (DE)**

(74) Vertreter: **Pürckhauer, Rolf,**
**Friedrich-Ebert-Strasse 27 Postfach 10 09 28,**
**D-5900 Slegen 1 (DE)**

## Beschreibung

Die Erfindung bezieht sich auf einen Spreizdübel mit einer Dübelhülse mit Längsschlitzen, einem mit einer axialen Gewindebohrung versehenen Spreizkonus, einer Spannschraube für diesen Konus und einem Außengewinde an der Hülse.

Aus dem DE-GM 73 23 483 ist ein Spreizdübel dieser Art bekannt, dessen Außenprofilierung in Form eines Gewindes sich nur über den in ein Bohrloch einzusetzenden Teil des Dübels erstreckt und beim Anziehen einer auf dem Außenende der Spannschraube, an deren Innenende der Spreizkonus einstückig angesetzt ist, die sich zunächst mitdrehende Dübelhülse in das Bohrloch ziehen soll.

Bei solchen Dübeln ist es jedoch kaum möglich, beim Befestigen von Teilen, die einen vorgegebenen Abstand von der Wand haben sollen oder müssen, diesen Abstand genau festzulegen und beim Festziehen von Befestigungsmitteln, z.B. der Mutter, beizubehalten. Dieses Problem tritt besonders bei Wänden aus oder mit Gipskartonplatten auf. Beim Anziehen von Schrauben kann sich der Dübel leicht weiter in die Wand verschieben, oder die Platte kann nach außen ausbrechen.

Eine Mutter als Abstandhalter zeigt zwar die DE-AS 1 291 458, jedoch kann dabei nicht die Einstecktiefe des Dübels festgelegt oder gar geändert werden.

Der Erfindung liegt die Aufgabe zugrunde, einen Spreizdübel der eingangs genannten Gattung so auszubilden, daß er einen verstellbaren Wandanschlag aufnehmen kann.

Diese Aufgabe wird erfindungsgemäß dadurch gelöst, daß sich das gleiche Außengewinde zur Aufnahme eines Wandanschlages in Form einer Mutter über die ganze Länge der Dübelhülse erstreckt und im Bohrloch gleichzeitig als Verankerungsprofilierung dient.

Als Wandanschlag kann beispielsweise eine Rändelmutter vorgesehen sein. Am Außenende der Dübelhülse kann in an sich bekannter Weise ein einstückig angeformtes Formstück beliebiger Ausbildung für spezielle Befestigungszwecke vorgesehen werden.

Der erfindungsgemäße Spreizdübel hat den Vorteil, daß er nicht nur wie ein normaler bekannter Spreizdübel verwendbar ist, sondern in bestimmten Befestigungsfällen einen genauen, beabsichtigten und leicht einstellbaren und ggf. auch nachstellbaren Wandabstand eines an der Wand zu befestigenden Teils gewährleistet. Die vorerwähnten Nachteile bei Gipskartonwänden werden vermieden. Bei größerem Wandabstand wird durch die Rändelmutter vermieden, daß der aus der Wand vorstehende geschlitzte Teil des Dübels sich aufspreizt.

In der Zeichnung sind Ausführungsbeispiele der Erfindung dargestellt. Dabei zeigt

Fig. 1 in gesprengter Darstellung einen Spreizdübel mit den zugehörigen Teilen,

Fig. 2 eine weitere Ausführungsform dieses Spreizdübels mit einem angesetzten Formstück in Seitenansicht und

Fig. 3 die Ausführungsform nach Fig. 2 in Draufsicht.

Der Spreizdübel ist ein Kunststoff-Spritzteil und weist eine Dübelhülse 1 mit Längsschlitzen 2 auf, die sich über den größten Teil ihrer Länge vom wandinnenseitigen Ende aus erstrecken. Die Längsschlitze 2 liegen sich diametral gegenüber und sind am wandinnenseitigen Ende mit dünnen Abreißstegen 3 geschlossen. Die Dübelhülse 1 weist über ihre gesamte Länge ein Außengewinde 4 auf und kann bei Bedarf somit eine Rändelmutter 5 aufnehmen, die auf einen bestimmten Wandabstand eines zu befestigenden Teils eingestellt werden kann.

Zum Spreizdübel gehört ferner ein Spreizkonus 6 aus Kunststoff mit einer axialen Schraubenbohrung 7, die entweder eine Gewindebohrung oder ein Kernloch für selbstschneidende Schrauben, wie z.B. die dargestellte Holzschraube 8, sein kann. Die Dübelhülse 1 selbst ist natürlich innen zylindrisch hohl und zum Innenende hin etwas konisch aufgeweitet. Nach Lösen der Schraube 8 ist auch ein Nachstellen des Wandabstandes durch Drehen der Rändermutter 5 möglich. Um ein Mitdrehen des Spreizkonus 6 zu verhindern, weist dieser kleine, in die Schlitze 2 eingreifende Ansätze 10 auf, mit denen der Spreizdübel 6 auch nach Einrasten derselben hinter die Abreißstege 3 unverlierbar am Dübel 1 gehalten werden kann.

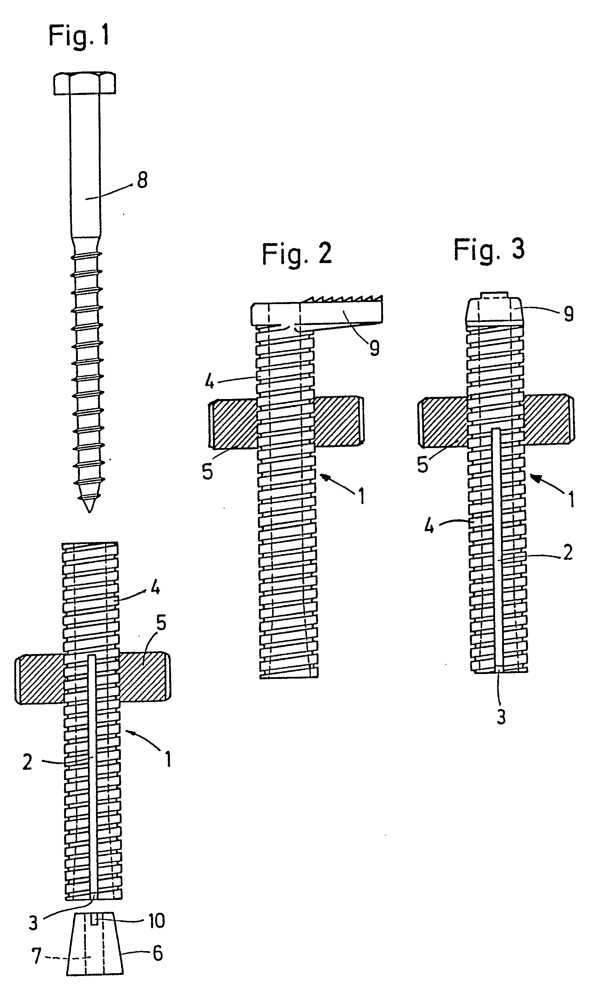

Die Fig. 2 und 3 zeigen eine spezielle Dübelhülse 1, an der am wandaußenseitigen Ende ein Formstück 9 einstückig angeformt ist, das einem speziellen Befestigungszweck dient. Das Formstück 9 kann z.B. als Führungsstück beim Befestigen einer Montageschiene für Heizkörper o. dgl. dienen, wie dies in der DE-OS 33 06 634 beschrieben ist. Es können aber auch andere Formstücke an die Dübelhülse 1 angeformt werden.

## Patentansprüche

1. Spreizdübel mit einer Dübelhülse (1) mit Längsschlitzen, einem mit einer axialen Gewindebohrung versehenen Spreizkonus, einer Spannschraube für diesen Konus (6) und einem Außengewinde an der Hülse (1), dadurch gekennzeichnet, daß sich das gleiche Außengewinde (4) zur Aufnahme eines Wandanschlages in Form einer Mutter über die ganze Länge der Dübelhülse (1) erstreckt und im Bohrloch gleichzeitig als Verankerungsprofilierung dient.

2. Spreizdübel nach Anspruch 1, dadurch gekennzeichnet, daß die als Wandanschlag dienende Mutter eine Rändelmutter (5) ist.

3. Spreizdübel nach Anspruch 1 oder 2, gekennzeichnet durch ein am Außenende der Dübelhülse (1) einstückig angeformtes Formstück (9) für spezielle Befestigungszwecke.

## Claims

1. A wall anchor comprising a sleeve (1) with longitudinal slits, a spreading cone having an axial threaded hole, a screw for tightening the cone (6) and an external thread on the sleeve (1), characterized in that the same external thread (4) extends along the entire length of the sleeve (1) so as to accommodate a wall stop in the form of a nut, the external thread simultaneously serving as an anchoring profile in a bore hole.

2. A wall anchor as claimed in claim 1, characterized in that the nut serving as a wall stop is a knurled nut (5).

3. A wall anchor as claimed in claim 1 or 2, characterized by a shaped part (9) moulded in one piece on the outer end of the sleeve (1) for special attachment purposes.

**Revendications**

1. Cheville expansible comprenant une douille de cheville (1) à fentes longitudinales, un cône d'expansion muni d'un alésage axiale taraudé, une vis de serrage pour ce cône (6), et un filetage extérieur sur la douille (1) caractérisée en ce que le même filetage extérieur (4) de réception d'une butée sur un mur en forme d'écrou s'étend sur toute la longueur de la douille de cheville (1) et sert en même temps, dans le trou, de profil d'ancrage.

2. Cheville d'expansion selon la revendication 1, caractérisée en ce que l'écrou servant de butée de mur est un écrou moleté (5).

3. Cheville d'expansion selon la revendication 1 ou 2, caractérisée par une pièce conformée (9) qui est formée d'un seul tenant à l'extrémité extérieure de la douille de cheville (1) et qui est destinée à des fins particulières de fixation.

# Fig. 1

8

# Fig. 2

9

4

5

1

# Fig. 3

9

5

1

4

2

3

4

5

2

1

3

10

7

6